# EUROPÄISCHE PATENTSCHRIFT

(11) **EP 3 655 307 B1**
(45) Veröffentlichungstag und Bekanntmachung des Hinweises auf die Patenterteilung: **12.05.2021**
(21) Anmeldenummer: 18759870.1
(22) Anmeldetag: 13.08.2018
(51) Int. Cl.: B61L 27/00, B61L 25/02, B61L 23/04, B61L 15/00

(54) **VORRICHTUNGEN VERFAHREN ZUM BETREIBEN EINES SCHIENENFAHRZEUGNETZES**
DEVICES AND METHOD FOR OPERATING A RAIL VEHICLE NETWORK
DISPOSITIFS ET PROCÉDÉ POUR COMMANDER UN RÉSEAU DE VÉHICULES FERROVIAIRES

(30) Priorität: 01.09.2017 DE 102017215346
(43) Veröffentlichungstag der Anmeldung: 27.05.2020
(73) Patentinhaber: Siemens Mobility GmbH, 81739 München (DE)
(72) Erfinder: HAMMER, Walter, 68239 Mannheim (DE); STRÖSSNER, Christian, 91091 Großenseebach (DE)
(86) Internationale Anmeldenummer: PCT/EP2018/071871
(87) Internationale Veröffentlichungsnummer: WO 2019/042752

(56) Entgegenhaltungen:
- EP-A1- 0 704 366
- DE-A1-102008 012 416
- DE-A1-102009 049 081

## Beschreibung

Die Erfindung bezieht sich auf ein Verfahren zum Betreiben eines Schienenfahrzeugnetzes.

Derzeit werden im spurgebundenen Schienenverkehr Kollisionen durch die Achtsamkeit des Triebfahrzeugführers sowie in definierten Streckenabschnitten durch den Einsatz von Zugsicherungssystemen verhindert. Zugsicherungssysteme erfordern jedoch immer eine streckenseitige Ausrüstung, was zu hohen Investitionskosten führt.

Aus der Druckschrift EP 0 704 366 A1 ist eine Anordnung zur Sicherung von Bahnstrecken bekannt. Dabei sind Züge oder Hindernisse mit GPS-Empfängern ausgestattet, die mit jeweiligen Funkstationen verbunden sind. Die Funkstationen senden zyklisch GPS-Standortinformationen und Identifikationssignale aus. Die Identifikationssignale enthalten Informationen über die Art der Sendestation, beispielsweise Eilzug, Nahverkehrszug oder Bautrupp. Die Funkstationen sind mit Auswerteeinheiten verbunden, die bei Empfang der Standortinformationen einer anderen Funkstation die Entfernung zum eigenen Standort bestimmen und bei Unterschreiten einer vorgegebenen Mindestentfernung ein Warnsignal ausgeben.

Der Erfindung liegt die Aufgabe zugrunde, den Betrieb eines Schienenfahrzeugnetzes mit möglichst geringen Investitionskosten, aber dennoch hoher Sicherheit, insbesondere auf eingleisigen Streckenabschnitten, zu ermöglichen.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass jedes der Schienenfahrzeuge seine Positionsinformationen an eine streckenseitige Zentraleinrichtung übermittelt, die Zentraleinrichtung die empfangenen Positionsinformationen an alle Schienenfahrzeuge in dem Schienenfahrzeugnetz weiterleitet und die Schienenfahrzeuge jeweils eine schienenfahrzeugeigene Kollisionsüberwachungseinrichtung aufweisen, die die empfangenen Positionsinformationen mit Blick auf ein etwaiges Kollisionsrisiko einer Kollision mit einem oder mehreren der anderen Schienenfahrzeuge prüft und im Falle eines festgestellten Kollisionsrisikos ein Kollisionswarnsignal erzeugt.

Die Schienenfahrzeuge übermitteln im Falle eines festgestellten Kollisionsrisikos das Kollisionswarnsignal zu der Zentraleinrichtung. Die Zentraleinrichtung leitet empfangene Kollisionswarnsignale an zumindest die vom Kollisionsrisiko betroffenen Schienenfahrzeuge weiter.

Ein wesentlicher Vorteil des erfindungsgemäßen Verfahrens ist darin zu sehen, dass eine Kollisionsüberwachung schienenfahrzeugseitig, und zwar mittels der vorgesehenen schienenfahrzeugeigenen Kollisionsüberwachungseinrichtung erfolgt. Streckenseitig ist lediglich eine Zentraleinrichtung vorzusehen, die die Weiterleitung der Positionsinformationen an die Schienenfahrzeuge vornimmt.

Vorteilhaft ist es, wenn jedes der Schienenfahrzeuge seine Positionsinformationen mittels einer Mobilfunkeinrichtung an die Zentraleinrichtung übermittelt. Geeignete Mobilfunkeinrichtungen sind schienenfahrzeugseitig üblich, so dass das Senden und Empfangen von Positionsinformationen ohne zusätzliche Hardware möglich ist.

Mit Blick auf den in der Eisenbahntechnik üblichen GSM-R-Mobilfunk wird es als vorteilhaft angesehen, dass jedes der Schienenfahrzeuge seine Positionsinformationen mittels einer GSM-R-Mobilfunkeinrichtung an die Zentraleinrichtung übermittelt.

Mit Blick auf eine einfache und kostengünstige Ortung wird es als vorteilhaft angesehen, wenn jedes der Schienenfahrzeuge mit einer eigenen satellitengestützten Ortungseinrichtung ausgestattet ist und seine Positionsinformationen auf der Basis der Ortungsdaten der Ortungseinrichtung ermittelt oder als seine Positionsinformationen die Ortungsdaten der Ortungseinrichtung an die Zentraleinrichtung weiterleitet.

Die satellitengestützten Ortungseinrichtungen sind bevorzugt GPS- oder Galileo-Ortungseinrichtungen.

Auch ist es von Vorteil, wenn die Schienenfahrzeuge im Falle eines festgestellten Kollisionsrisikos Kollisionsrisikodaten zu der Zentraleinrichtung übermitteln. Die Zentraleinrichtung leitet empfangene Kollisionsrisikodaten vorzugsweise an zumindest die vom Kollisionsrisiko betroffenen Schienenfahrzeuge weiter. Die Kollisionsrisikodaten geben vorzugsweise die von der bevorstehenden oder zu befürchtenden Kollision betroffenen Schienenfahrzeuge an.

Mit Blick auf eine besonders aufwandsarme und schnelle Bestimmung eines Kollisionsrisikos wird es als vorteilhaft angesehen, wenn jedes der Schienenfahrzeuge zusätzlich zu den Positionsinformationen Geschwindigkeitsinformationen, die die jeweilige Geschwindigkeit des Schienenfahrzeugs angeben, an die streckenseitige Zentraleinrichtung übermittelt, die Zentraleinrichtung die empfangenen Positions- und Geschwindigkeitsinformationen an alle Schienenfahrzeuge in dem Schienenfahrzeugnetz weiterleitet und die Kollisionsüberwachungseinrichtungen der Schienenfahrzeuge die empfangenen Positions- und Geschwindigkeitsinformationen bei der Ermittlung des Kollisionsrisikos, der Erzeugung des Kollisionswarnsignals und/oder der Erzeugung der Kollisionsrisikodaten berücksichtigen.

Auch ist es von Vorteil, wenn die Zentraleinrichtung die empfangenen Positionsinformationen mit einer zentraleinrichtungsseitigen Kollisionsüberwachungseinrichtung mit Blick auf ein etwaiges Kollisionsrisiko prüft und im Falle eines festgestellten Kollisionsrisikos ein zentraleinrichtungsseitiges Kollisionswarnsignal an alle betroffenen Schienenfahrzeuge übersendet.

Die Schienenfahrzeuge sind vorzugsweise im Führerstand oder in den Führerständen jeweils mit einer optischen und/oder akustischen Warneinrichtung ausgestattet, die bei Vorliegen eines von der schienenfahrzeugeigenen Kollisionsüberwachungseinrichtung erzeugten Kollisionswarnsignals oder bei Empfang eines zentraleinrichtungsseitigen Kollisionswarnsignals aktiviert wird.

Eine Bremsaktivierungseinrichtung der Schienenfahrzeuge wird vorzugsweise bei Vorliegen eines von der schienenfahrzeugeigenen Kollisionsüberwachungseinrichtung erzeugten Kollisionswarnsignals oder bei Empfang eines zentraleinrichtungsseitigen Kollisionswarnsignals ein automatisches Bremsen des Schienenfahrzeugs auslösen.

Die Zentraleinrichtung ist vorzugsweise mit einer optischen und/oder akustischen Warneinrichtung ausgestattet, die bei Empfang eines von einer der schienenfahrzeugeigenen Kollisionsüberwachungseinrichtungen empfangenen Kollisionswarnsignals oder bei Vorliegen eines zentraleinrichtungsseitigen Kollisionswarnsignals aktiviert wird.

Die nachfolgenden Beispiele sind hilfreich für das Verständnis des erfindungsgemäßen Verfahrens.
- FIG 1: eine Eisenbahnanlage, bei der Schienenfahrzeuge ihre Positionsinformationen an eine Zentraleinrichtung übermitteln,
- FIG 2: die Eisenbahnanlage zu einem späteren Zeitpunkt, zu dem sich zwei Schienenfahrzeuge bereits gefährlich genähert haben,
- FIG 3: eine Eisenbahnanlage, bei der Schienenfahrzeuge zusätzlich zu Positionsinformationen Geschwindigkeitsinformationen an die Zentraleinrichtung übermitteln,
- FIG 4: ein Schienenfahrzeug, das auf der Eisenbahnanlage gemäß den FIG 1 und 2 betrieben werden kann,
- FIG 5: ein Schienenfahrzeug, das auf der Eisenbahnanlage gemäß FIG 3 betrieben werden kann, und
- FIG 6: eine Eisenbahnanlage, bei der eine Zentraleinrichtung eine eigene Kollisionsüberwachungseinrichtung aufweist.

In den Figuren werden der Übersicht halber für identische oder vergleichbare Komponenten stets dieselben Bezugszeichen verwendet.

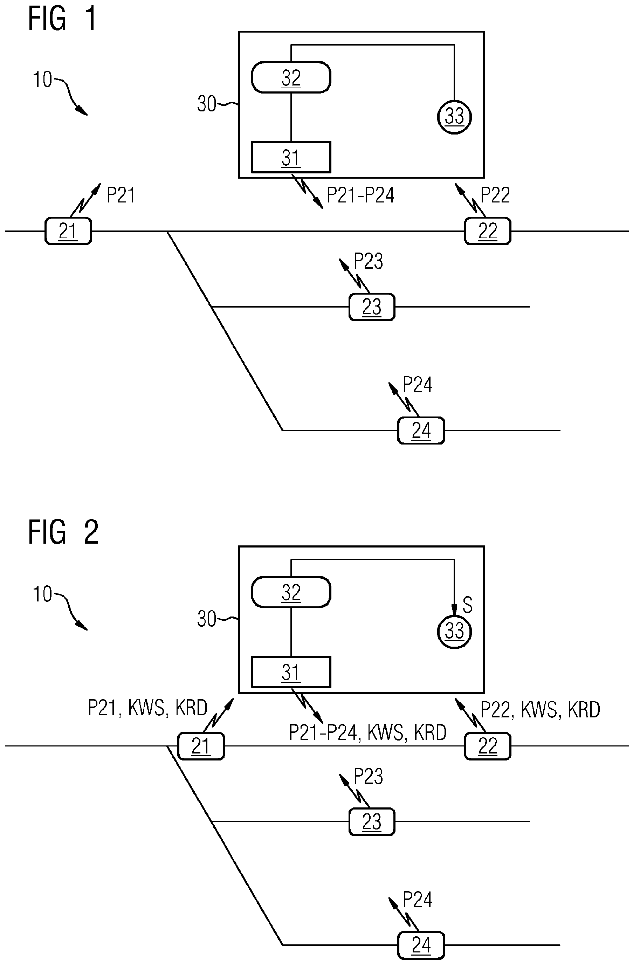

Die FIG 1 zeigt ein Schienenfahrzeugnetz in Form einer Eisenbahnanlage 10, die von vier Schienenfahrzeugen 21, 22, 23 und 24 befahren wird. Die Schienenfahrzeuge 21, 22, 23 und 24 stehen mit einer Zentraleinrichtung 30 in Verbindung und übermitteln an diese Positionsinformationen P21, P22, P23 und P24, die die jeweilige Position des Schienenfahrzeugs auf der Eisenbahnanlage 10 angeben. Die Übertragung der Positionsinformationen P21, P22, P23 und P24 erfolgt über Funk, vorzugsweise über GSM-R-Mobilfunkeinrichtungen.

Die Zentraleinrichtung 30 empfängt die Positionsinformationen P21 bis P24 und leitet diese per Funk, vorzugsweise ebenfalls über GSM-R-Mobilfunk, an alle Schienenfahrzeuge 21, 22, 23 und 24 weiter. Dieses Weiterleiten der Positionsinformationen ermöglicht es jeweils jedem Schienenfahrzeug, selbst das Risiko einer Kollision mit einem oder mehreren anderen Schienenfahrzeugen zu prüfen. Stellt ein Schienenfahrzeug ein Kollisionsrisiko fest, so erzeugt es ein Kollisionswarnsignal.

Bei der Darstellung gemäß FIG 1 wird beispielhaft davon ausgegangen, dass die Schienenfahrzeuge 21, 22, 23 und 24 nach Prüfung der Positionsinformationen kein Kollisionsrisiko festgestellt haben.

Die FIG 1 zeigt darüber hinaus ein Beispiel für den Aufbau der Zentraleinrichtung 30 näher im Detail. Die Zentraleinrichtung 30 umfasst eine Mobilfunkeinrichtung 31 zum Empfang der von den Schienenfahrzeugen 21 bis 24 übersandten Positionsinformationen P21 bis P24. Die Mobilfunkeinrichtung 31 leitet die empfangenen Positionsinformationen P21 bis P24 an eine Informationsverteileinrichtung 32 weiter. Die Informationsverteileinrichtung 32 steuert die Mobilfunkeinrichtung 31 derart an, dass diese die empfangenen Positionsinformationen P21-P24, vorzugsweise in gebündelter Form, wieder zurück an die Schienenfahrzeuge 21 bis 24 sendet, so dass alle Schienenfahrzeuge 21 bis 24 stets jeweils alle Positionsinformationen P21 bis P24 erhalten und somit die Position aller anderen Schienenfahrzeuge kennen.

Die Zentraleinrichtung 30 weist vorzugsweise darüber hinaus eine akustische und/oder optische Warneinrichtung 33 auf, die mit der Informationsverteileinrichtung 32 in Verbindung steht. Empfangen die Mobilfunkeinrichtung 31 und die Informationsverteileinrichtung 32 ein Kollisionswarnsignal oder Kollisionsrisikodaten von einem oder mehreren der auf der Eisenbahnanlage 10 fahrenden Schienenfahrzeugen, so erzeugt die Informationsverteileinrichtung 32 vorzugsweise ein Aktivierungssignal S zur Aktivierung der Warneinrichtung 33.

Die FIG 2 zeigt die Eisenbahnanlage 10 gemäß FIG 1 zu einem späteren Zeitpunkt. Es lässt sich erkennen, dass sich die Schienenfahrzeuge 21 und 22 bereits deutlich genähert haben, weil sie aufeinander zufahren. Die Schienenfahrzeuge 21 und 22 werden demgemäß ein Kollisionsrisiko feststellen und ein entsprechendes Kollisionswarnsignal KWS erzeugen.

Im Falle eines festgestellten Kollisionsrisikos werden die Schienenfahrzeuge 21 und 22 das Kollisionswarnsignal KWS und/oder Kollisionsrisikodaten KRD, die das Kollisionsrisiko näher beschreiben und insbesondere die beteiligten Schienenfahrzeuge identifizieren, über Funk zur Zentraleinrichtung 30 übermitteln. Die Zentraleinrichtung 30 leitet zusätzlich zu den Positionsinformationen P21 bis P24 die empfangenen Kollisionswarnsignale KWS und/oder Kollisionsrisikodaten KRD an alle Schienenfahrzeuge auf der Eisenbahnanlage 10 oder aber zumindest an die betroffenen Schienenfahrzeuge, also hier die Schienenfahrzeuge 21 und 22, weiter.

Schienenfahrzeuge, die ein sich selbst betreffendes Kollisionsrisiko festgestellt haben und/oder für sie relevante Kollisionswarnsignale und/oder Kollisionsrisikodaten von anderen Schienenfahrzeugen über die Zentraleinrichtung 30 empfangen haben, werden ihr Fahrverhalten anpassen, insbesondere ihre Geschwindigkeit deutlich reduzieren oder anhalten, um ein Zusammenstoßen mit einem anderen Schienenfahrzeug zu verhindern. Beim Ausführungsbeispiel gemäß FIG 2 werden die Schienenfahrzeuge 21 und 22 also vorzugsweise nur mit Minimalgeschwindigkeit weiterfahren oder stoppen.

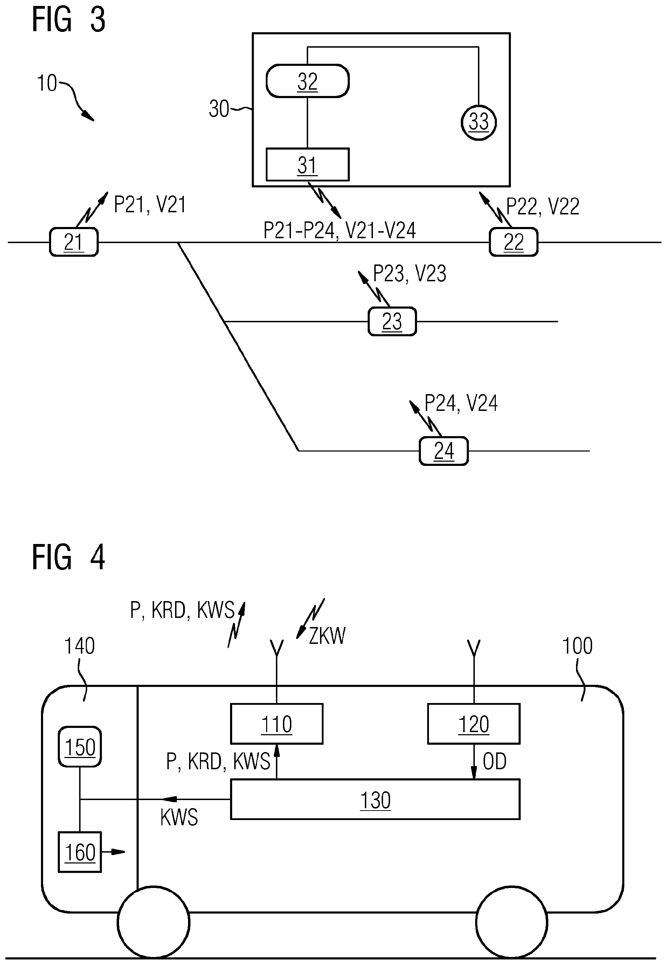

Die FIG 3 zeigt ein Beispiel für eine Eisenbahnanlage 10, bei der die Schienenfahrzeuge 21, 22, 23 und 24 zusätzlich zu Positionsinformationen P21 bis P24 Geschwindigkeitsinformationen V21 bis V24 an die Zentraleinrichtung 30 übermitteln. Die Zentraleinrichtung 30 leitet die empfangenen Positionsinformationen P21 bis P24 sowie die empfangenen Geschwindigkeitsinformationen V21 bis V24 an alle Schienenfahrzeuge 21 bis 24 weiter.

Die Schienenfahrzeuge 21 bis 24 haben somit die Möglichkeit, bei der Ermittlung bzw. Bestimmung des Kollisionsrisikos zusätzlich zu den Positionsinformationen P21 bis P24 auch die jeweiligen Geschwindigkeitsinformationen V21 bis V24 zu berücksichtigen.

Im Übrigen gelten die obigen Ausführungen im Zusammenhang mit den FIG 1 bis 2 bei dem Ausführungsbeispiel gemäß FIG 3 entsprechend.

Die FIG 4 zeigt ein Beispiel für ein Schienenfahrzeug 100, das bei der Eisenbahnanlage 10 gemäß den FIG 1 und 2 als jedes der Schienenfahrzeuge 21 bis 24 eingesetzt werden kann. Das Schienenfahrzeug 100 weist eine Mobilfunkeinrichtung 110, eine satellitengestützte Ortungseinrichtung 120 und eine Kollisionsüberwachungseinrichtung 130 auf.

Die Kollisionsüberwachungseinrichtung 130 leitet die Ortungsdaten OD der Ortungseinrichtung 120 in unverarbeiteter oder verarbeiteter Form als Positionsinformationen P mittels der Mobilfunkeinrichtung 110 an die in den FIG 1 und 2 gezeigte Zentraleinrichtung 30 weiter.

Darüber hinaus wertet die Kollisionsüberwachungseinrichtung 130 die von der Zentraleinrichtung 30 weitergeleiteten Positionsinformationen der anderen auf der Eisenbahnanlage 10 gemäß den FIG 1 und 2 fahrenden Schienenfahrzeuge aus. Stellt die Kollisionsüberwachungseinrichtung 130 anhand der empfangenen Positionsinformationen ein Kollisionsrisiko fest, so erzeugt sie ein Kollisionswarnsignal KWS und Kollisionsrisikodaten KRD, die das Kollisionsrisiko beschreiben und insbesondere die beteiligten Schienenfahrzeuge identifizieren. Das Kollisionswarnsignal KWS und/oder die Kollisionsrisikodaten KRD werden an die Zentraleinrichtung 30 übersandt.

Mit dem Kollisionswarnsignal KWS kann eine in einem Führerstand 140 des Schienenfahrzeugs 100 befindliche Warneinrichtung 150 und/oder eine Bremsaktivierungseinrichtung 160 aktiviert werden. Die Bremsaktivierungseinrichtung 160 löst im Falle des Vorliegens des Kollisionswarnsignals KWS ein automatisches Bremsen des Schienenfahrzeugs 100 aus.

Die Kollisionsüberwachungseinrichtung 130 kann darüber hinaus ein zentraleinrichtungsseitiges Kollisionswarnsignal ZKW über die Mobilfunkeinrichtung 110 empfangen, sofern dieses von der Zentraleinrichtung 30 übersendet wird. Im Falle des Empfangs eines zentraleinrichtungsseitigen Kollisionswarnsignals ZKW wird vorzugsweise die Warneinrichtung 150 und die Bremsaktivierungseinrichtung 160 aktiviert.

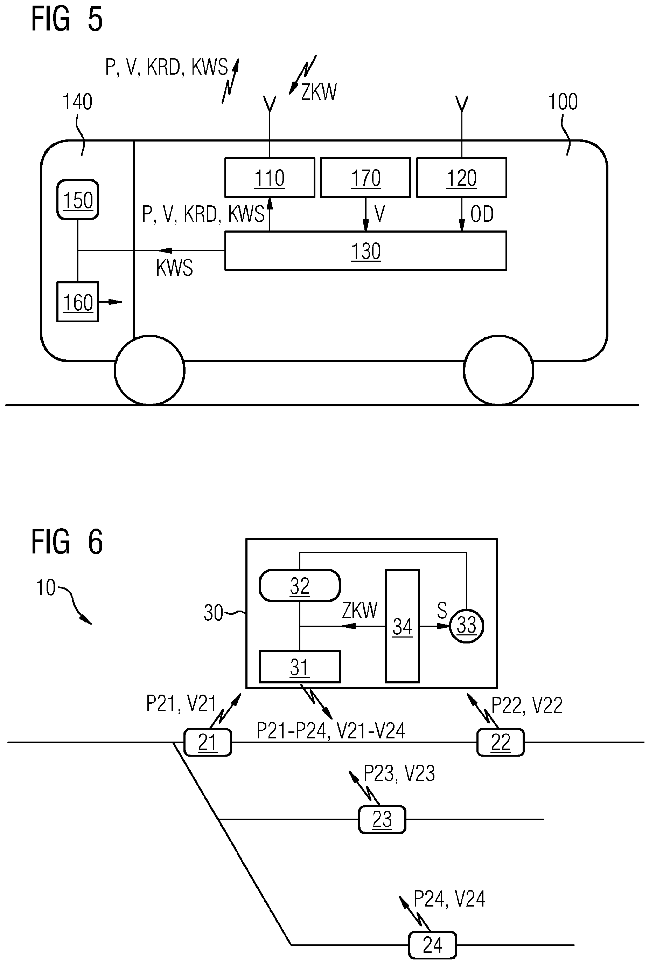

Soll das Schienenfahrzeug 100 bei der Eisenbahnanlage 10 gemäß FIG 3 eingesetzt werden, so wird es zusätzlich Geschwindigkeitsinformationen V, die die jeweilige Geschwindigkeit angeben, an die Zentraleinrichtung 30 übersenden. Eine solche Variante des Schienenfahrzeugs 100 zeigt die FIG 5. Die Geschwindigkeitsinformationen V können aus den Positionsinformationen P der Ortungseinrichtung 120 durch Ableitung nach der Zeit gebildet oder mittels einer separaten Geschwindigkeitsmesseinrichtung 170 gemessen werden.

Die FIG 6 zeigt ein Beispiel für eine Eisenbahnanlage 10, bei der die Zentraleinrichtung 30 mit einer zentraleinrichtungsseitigen Kollisionsüberwachungseinrichtung 34 ausgestattet ist. Die Kollisionsüberwachungseinrichtung 34 wertet die eingehenden Positionsinformationen P21 bis P24 und - sofern diese übermittelt werden - eingehende Geschwindigkeitsinformationen V21 bis V24 aus und stellt ggf. ein Kollisionsrisiko zwischen Schienenfahrzeugen fest. Besteht ein solches Kollisionsrisiko, so erzeugt sie ein zentraleinrichtungsseitiges Kollisionswarnsignal ZKW, das an die von der Kollision betroffenen Schienenfahrzeuge, beispielsweise die Schienenfahrzeuge 21 und 22, oder an alle Schienenfahrzeuge 21 bis 24 übermittelt wird.

Im Falle des Vorliegens des zentraleinrichtungsseitigen Kollisionswarnsignals ZKW wird vorzugsweise auch die Warneinrichtung 33 der Zentraleinrichtung 30 mittels des Steuersignals S aktiviert.

Im Übrigen gelten die obigen Ausführungen im Zusammenhang mit den FIG 1 bis 5 entsprechend.

## Patentansprüche

1. Verfahren zum Betreiben eines Schienenfahrzeugnetzes, in dem eine Vielzahl an Schienenfahrzeugen (21, 22, 23, 24) fährt, wobei die Schienenfahrzeuge (21, 22, 23, 24) ihre jeweilige Position in dem Schienenfahrzeugnetz unter Bildung von Positionsinformationen (P, P21, P22, P23, P24) ermitteln,
- bei dem jedes der Schienenfahrzeuge (21, 22, 23, 24) seine Positionsinformationen (P, P21, P22, P23, P24) an eine streckenseitige Zentraleinrichtung (30) übermittelt,
- bei dem die Zentraleinrichtung (30) die empfangenen Positionsinformationen (P, P21, P22, P23, P24) an alle Schienenfahrzeuge (21, 22, 23, 24) in dem Schienenfahrzeugnetz weiterleitet und
- bei dem die Schienenfahrzeuge (21, 22, 23, 24) jeweils eine schienenfahrzeugeigene Kollisionsüberwachungseinrichtung (130) aufweisen, die die empfangenen Positionsinformationen (P, P21, P22, P23, P24) mit Blick auf ein etwaiges Kollisionsrisiko einer Kollision mit einem oder mehreren der anderen Schienenfahrzeuge (21, 22, 23, 24) prüft und im Falle eines festgestellten Kollisionsrisikos ein Kollisionswarnsignal (KWS) erzeugt,
- bei dem die Schienenfahrzeuge (21, 22, 23, 24) im Falle eines festgestellten Kollisionsrisikos das Kollisionswarnsignal (KWS) zu der Zentraleinrichtung (30) übermitteln und
- bei dem die Zentraleinrichtung (30) empfangene Kollisionswarnsignale (KWS) an zumindest die vom Kollisionsrisiko betroffenen Schienenfahrzeuge (21, 22, 23, 24) weiterleitet.

2. Verfahren nach Anspruch 1, bei dem jedes der Schienenfahrzeuge (21, 22, 23, 24) mit einer Mobilfunkeinrichtung (110) ausgestattet ist und seine Positionsinformationen (P, P21, P22, P23, P24) mittels der Mobilfunkeinrichtung (110) an die Zentraleinrichtung (30) übermittelt.

3. Verfahren nach Anspruch 2, bei dem jedes der Schienenfahrzeuge (21, 22, 23, 24) mit einer GSM-R-Mobilfunkeinrichtung (110) ausgestattet ist und seine Positionsinformationen (P, P21, P22, P23, P24) mittels der GSM-R-Mobilfunkeinrichtung (110) an die Zentraleinrichtung (30) übermittelt.

4. Verfahren nach einem der voranstehenden Ansprüche, bei dem jedes der Schienenfahrzeuge (21, 22, 23, 24) mit einer eigenen satellitengestützten Ortungseinrichtung (120) ausgestattet ist und seine Positionsinformationen (P, P21, P22, P23, P24) auf der Basis der Ortungsdaten (OD) der Ortungseinrichtung (120) ermittelt oder als seine Positionsinformationen (P, P21, P22, P23, P24) die Ortungsdaten (OD) der Ortungseinrichtung (120) an die Zentraleinrichtung (30) weiterleitet.

5. Verfahren nach Anspruch 4, bei dem die satellitengestützten Ortungseinrichtungen GPS- oder Galileo-Ortungseinrichtungen sind.

6. Verfahren nach einem der voranstehenden Ansprüche,
- bei dem die Schienenfahrzeuge (21, 22, 23, 24) im Falle eines festgestellten Kollisionsrisikos Kollisionsrisikodaten (KRD) zu der Zentraleinrichtung (30) übermitteln und
- bei dem die Zentraleinrichtung (30) empfangene Kollisionsrisikodaten (KRD) an zumindest die vom Kollisionsrisiko betroffenen Schienenfahrzeuge (21, 22, 23, 24) weiterleitet.

7. Verfahren nach einem der voranstehenden Ansprüche,
- bei dem jedes der Schienenfahrzeuge (21, 22, 23, 24) zusätzlich zu den Positionsinformationen (P, P21, P22, P23, P24) Geschwindigkeitsinformationen (V, V21, V22, V23, V24), die die jeweilige Geschwindigkeit des Schienenfahrzeugs (21, 22, 23, 24) angeben, an die streckenseitige Zentraleinrichtung (30) übermittelt,
- bei dem die Zentraleinrichtung (30) die empfangenen Positions- und Geschwindigkeitsinformationen (P, P21, P22, P23, P24, V, V21, V22, V23, V24) an alle Schienenfahrzeuge (21, 22, 23, 24) in dem Schienenfahrzeugnetz weiterleitet und
- bei dem die Kollisionsüberwachungseinrichtungen der Schienenfahrzeuge (21, 22, 23, 24) die empfangenen Positions- und Geschwindigkeitsinformationen (P, P21, P22, P23, P24, V, V21, V22, V23, V24) bei der Ermittlung des Kollisionsrisikos, der Erzeugung des Kollisionswarnsignals (KWS) und/oder der Erzeugung der Kollisionsrisikodaten (KRD) berücksichtigen.

8. Verfahren nach einem der voranstehenden Ansprüche, bei dem die Zentraleinrichtung (30) die empfangenen Positionsinformationen (P, P21, P22, P23, P24) mit einer zentraleinrichtungsseitigen Kollisionsüberwachungseinrichtung (34) mit Blick auf ein etwaiges Kollisionsrisiko prüft und im Falle eines festgestellten Kollisionsrisikos ein zentraleinrichtungsseitiges Kollisionswarnsignal (ZKW) an alle betroffenen Schienenfahrzeuge (21, 22, 23, 24) übersendet.

9. Verfahren nach einem der voranstehenden Ansprüche, bei dem die Schienenfahrzeuge (21, 22, 23, 24) im Führerstand (140) oder in den Führerständen jeweils mit einer optischen und/oder akustischen Warneinrichtung (150) ausgestattet sind, die bei Vorliegen eines von der schienenfahrzeugeigenen Kollisionsüberwachungseinrichtung (130) erzeugten Kollisionswarnsignals (KWS) oder bei Empfang eines zentraleinrichtungsseitigen Kollisionswarnsignals (ZKW) aktiviert wird.

10. Verfahren nach einem der voranstehenden Ansprüche, bei dem eine Bremsaktivierungseinrichtung (160) der Schienenfahrzeuge (21, 22, 23, 24) bei Vorliegen eines von der schienenfahrzeugeigenen Kollisionsüberwachungseinrichtung (130) erzeugten Kollisionswarnsignals (KWS) oder bei Empfang eines zentraleinrichtungsseitigen Kollisionswarnsignals (ZKW) ein automatisches Bremsen des Schienenfahrzeugs (21, 22, 23, 24) auslösen.

11. Verfahren nach einem der voranstehenden Ansprüche, bei dem die Zentraleinrichtung (30) mit einer optischen und/oder akustischen Warneinrichtung (33) ausgestattet ist, die bei Empfang eines von einer der schienenfahrzeugeigenen Kollisionsüberwachungseinrichtungen empfangenen Kollisionswarnsignals (KWS) oder bei Vorliegen eines zentraleinrichtungsseitigen Kollisionswarnsignals (ZKW) aktiviert wird.

## Claims

1. Method for operating a rail vehicle network in which a multiplicity of rail vehicles (21, 22, 23, 24) are traveling, wherein the rail vehicles (21, 22, 23, 24) determine their respective position in the rail vehicle network by creating position information (P, P21, P22, P23, P24),
- in which each of the rail vehicles (21, 22, 23, 24) transmits its position information (P, P21, P22, P23, P24) to a track-side central apparatus (30),
- in which the central apparatus (30) forwards the received position information (P, P21, P22, P23, P24) to all of the rail vehicles (21, 22, 23, 24) in the rail vehicle network and
- in which the rail vehicles (21, 22, 23, 24) each have a rail vehicle-specific collision monitoring apparatus (130) that checks the received position information (P, P21, P22, P23, P24) with regard to a potential collision risk of a collision with one or more of the other rail vehicles (21, 22, 23, 24) and generates a collision warning signal (KWS) in the event of an established collision risk,
- in which the rail vehicles (21, 22, 23, 24) transmit the collision warning signal (KWS) to the central apparatus (30) in the event of an established collision risk and
- in which the central apparatus (30) forwards received collision warning signals (KWS) to at least the rail vehicles (21, 22, 23, 24) concerned by the collision risk.

2. Method according to Claim 1, in which each of the rail vehicles (21, 22, 23, 24) is equipped with a mobile radio apparatus (110) and transmits its position information (P, P21, P22, P23, P24) to the central apparatus (30) by way of the mobile radio apparatus (110).

3. Method according to Claim 2, in which each of the rail vehicles (21, 22, 23, 24) is equipped with a GSM-R mobile radio apparatus (110) and transmits its position information (P, P21, P22, P23, P24) to the central apparatus (30) by way of the GSM-R mobile radio apparatus (110).

4. Method according to one of the preceding claims, in which each of the rail vehicles (21, 22, 23, 24) is equipped with a dedicated satellite-assisted positioning apparatus (120) and determines its position information (P, P21, P22, P23, P24) on the basis of the positioning data (OD) of the positioning apparatus (120) or forwards the positioning data (OD) of the positioning apparatus (120) to the central apparatus (30) as its position information (P, P21, P22, P23, P24).

5. Method according to Claim 4, in which the satellite-assisted positioning apparatuses are GPS or Galileo positioning apparatuses.

6. Method according to one of the preceding claims,
- in which the rail vehicles (21, 22, 23, 24) transmit collision risk data (KRD) to the central apparatus (30) in the event of an established collision risk and
- in which the central apparatus (30) forwards received collision risk data (KRD) to at least the rail vehicles (21, 22, 23, 24) concerned by the collision risk.

7. Method according to one of the preceding claims,
- in which each of the rail vehicles (21, 22, 23, 24), in addition to the position information (P, P21, P22, P23, P24), transmits speed information (V, V21, V22, V23, V24) that specifies the respective speed of the rail vehicle (21, 22, 23, 24) to the track-side central apparatus (30),
- in which the central apparatus (30) forwards the received position and speed information (P, P21, P22, P23, P24, V, V21, V22, V23, V24) to all of the rail vehicles (21, 22, 23, 24) in the rail vehicle network and
- in which the collision monitoring apparatuses of the rail vehicles (21, 22, 23, 24) take the received position and speed information (P, P21, P22, P23, P24, V, V21, V22, V23, V24) into consideration when determining the collision risk, generating the collision warning signal (KWS) and/or generating the collision risk data (KRD).

8. Method according to one of the preceding claims, in which the central apparatus (30) checks the received position information (P, P21, P22, P23, P24) with a central apparatus-side collision monitoring apparatus (34) with regard to a potential collision risk and sends a central apparatus-side collision warning signal (ZKW) to all concerned rail vehicles (21, 22, 23, 24) in the event of an established collision risk.

9. Method according to one of the preceding claims, in which the rail vehicles (21, 22, 23, 24) are each equipped with an optical and/or acoustic warning apparatus (150) in the driver's cabin (140) or in the driver's cabins, which warning apparatus is activated in the presence of a collision warning signal (KWS) generated by the rail vehicle-specific collision monitoring apparatus (130) or upon receiving a central apparatus-side collision warning signal (ZKW).

10. Method according to one of the preceding claims, in which a brake activation apparatus (160) of the rail vehicles (21, 22, 23, 24) triggers automatic braking of the rail vehicle (21, 22, 23, 24) in the presence of a collision warning signal (KWS) generated by the rail vehicle-specific collision monitoring apparatus (130) or upon receiving a central apparatus-side collision warning signal (ZKW).

11. Method according to one of the preceding claims, in which the central apparatus (30) is equipped with an optical and/or acoustic warning apparatus (33) that is activated upon receiving a collision warning signal (KWS) received from one of the rail vehicle-specific collision monitoring apparatuses or in the presence of a central apparatus-side collision warning signal (ZKW).

## Revendications

1. Procédé destiné au fonctionnement d'un réseau de véhicules ferroviaires, dans lequel une pluralité de véhicules ferroviaires (21, 22, 23, 24) se déplacent, dans lequel les véhicules ferroviaires (21, 22, 23, 24) déterminent leur position respective dans le réseau de véhicules ferroviaires par la création d'informations de position (P, P21, P22, P23, P24),
- dans lequel chacun des véhicules ferroviaires (21, 22, 23, 24) communique ses informations de position (P, P21, P22, P23, P24) à un dispositif central côté voie (30),
- dans lequel le dispositif central (30) retransmet les informations de position (P, P21, P22, P23, P24) reçues à tous les véhicules ferroviaires (21, 22, 23, 24) dans le réseau de véhicules ferroviaires et
- dans lequel les véhicules ferroviaires (21, 22, 23, 24) présentent respectivement un dispositif de surveillance de collision (130) propre aux véhicules ferroviaires qui vérifie les informations de position (P, P21, P22, P23, P24) reçues en ce qui concerne un risque de collision éventuel avec un ou plusieurs des autres véhicules ferroviaires (21, 22, 23, 24) et en cas de risque de collision constaté génère un signal d'avertissement de collision (KWS),
- dans lequel les véhicules ferroviaires (21, 22, 23, 24) communiquent le signal d'avertissement de collision (KWS) au dispositif central (30) en cas de risque de collision constaté, et
- dans lequel le dispositif central (30) retransmet des signaux d'avertissement de collision (KWS) reçus au moins aux véhicules ferroviaires (21, 22, 23, 24) concernés par le risque de collision.

2. Procédé selon la revendication 1, dans lequel chacun des véhicules ferroviaires (21, 22, 23, 24) est équipé d'un dispositif de téléphonie mobile (110) et communique ses informations de position (P, P21, P22, P23, P24) au moyen du dispositif de téléphonie mobile (110) au dispositif central (30).

3. Procédé selon la revendication 2, dans lequel chacun des véhicules ferroviaires (21, 22, 23, 24) est équipé d'un dispositif de téléphonie mobile GSM-R (110) et communique ses informations de position (P, P21, P22, P23, P24) au moyen du dispositif de téléphonie mobile GSM-R (110) au dispositif central (30).

4. Procédé selon l'une des revendications précédentes, dans lequel chacun des véhicules ferroviaires (21, 22, 23, 24) est équipé d'un dispositif de localisation (120) par satellite propre et détermine ses informations de position (P, P21, P22, P23, P24) sur la base des données de localisation (OD) du dispositif de localisation (120) ou retransmet les données de localisation (OD) du dispositif de localisation (120) au dispositif central (30) en tant que ses informations de position (P, P21, P22, P23, P24).

5. Procédé selon la revendication 4, dans lequel les dispositifs de localisation par satellite sont des dispositifs de localisation GPS ou Galilée.

6. Procédé selon l'une des revendications précédentes,
- dans lequel les véhicules ferroviaires (21, 22, 23, 24) communiquent au dispositif central (30) des données de risque de collision (KRD) en cas de risque de collision constaté et
- dans lequel le dispositif central (30) retransmet des données de risque de collision (KRD) reçues au moins aux véhicules ferroviaires (21, 22, 23, 24) concernés par le risque de collision.

7. Procédé selon l'une des revendications précédentes,
- dans lequel chacun des véhicules ferroviaires (21, 22, 23, 24) communique au dispositif central côté voie (30) en plus des informations de position (P, P21, P22, P23, P24) des informations de vitesse (V, V21, V22, V23, V24) qui indiquent la vitesse respective du véhicule ferroviaire (21, 22, 23, 24),
- dans lequel le dispositif central (30) retransmet les informations de position et de vitesse (P, P21, P22, P23, P24, V, V21, V22, V23, V24) reçues à tous les véhicules ferroviaires (21, 22, 23, 24) dans le réseau de véhicules ferroviaires et
- dans lequel les dispositifs de surveillance de collision des véhicules ferroviaires (21, 22, 23, 24) prennent en compte les informations de position et de vitesse (P, P21, P22, P23, P24, V, V21, V22, V23, V24) reçues lors de la détermination du risque de collision, de la génération du signal d'avertissement de collision (KWS) et/ou de la génération des données de risque de collision (KRD).

8. Procédé selon l'une des revendications précédentes, dans lequel le dispositif central (30) vérifie les informations de position (P, P21, P22, P23, P24) reçues avec un dispositif de surveillance de collision côté dispositif central (34) en ce qui concerne un risque de collision éventuel et, dans le cas d'un risque de collision constaté, envoie un signal d'avertissement de collision côté dispositif central (ZKW) à tous les véhicules ferroviaires (21, 22, 23, 24) concernés.

9. Procédé selon l'une des revendications précédentes, dans lequel les véhicules ferroviaires (21, 22, 23, 24) sont équipés dans la cabine de conducteur (140) ou dans les cabines de conducteur respectivement d'un dispositif d'avertissement optique et/ou acoustique (150) qui est activé en présence d'un signal d'avertissement de collision (KWS) généré par le dispositif de surveillance de collision (130) propre au véhicule ferroviaire ou lors de la réception d'un signal d'avertissement de collision côté dispositif central (ZKW).

10. Procédé selon l'une des revendications précédentes, dans lequel un dispositif d'actionnement de freins (160) des véhicules ferroviaires (21, 22, 23, 24) déclenche en présence d'un signal d'avertissement de collision (KWS) généré par le dispositif de surveillance de collision (130) propre au véhicule ferroviaire ou lors de la réception d'un signal d'avertissement de collision côté dispositif central (ZKW) déclenche un freinage automatique du véhicule ferroviaire (21, 22, 23, 24).

11. Procédé selon l'une des revendications précédentes, dans lequel le dispositif central (30) est équipé d'un dispositif d'avertissement optique et/ou acoustique (33) qui est activé lors de la réception d'un signal d'avertissement de collision (KWS) reçu par l'un des dispositifs de surveillance de collision propres au véhicule ferroviaire ou en présence d'un signal d'avertissement de collision côté dispositif central (ZKW).
